# EUROPEAN PATENT APPLICATION

(11) **EP 0 869 603 A2**
(43) Date of publication of application: **07.10.1998**
(21) Application number: 97308962.6
(22) Date of filing: 07.11.1997
(51) Int. Cl.: H02M 3/156

(54) **Regulating circuit**

(30) Priority: 31.03.1997 JP 79375/97
(71) Applicant: FUJITSU LIMITED, Kawasaki-shi, Kanagawa 211-8588 (JP)
(72) Inventor: Yano, Hidetoshi, Nakahara-ku, Kawasaki-shi, Kanagawa 211 (JP); Saeki, Mitsuo, Nakahara-ku, Kawasaki-shi, Kanagawa 211 (JP); Matsuda, Kouichi, Nakahara-ku, Kawasaki-shi, Kanagawa 211 (JP); Ozawa, Hidekiyo, Nakahara-ku, Kawasaki-shi, Kanagawa 211 (JP)
(74) Representative: Fenlon, Christine Lesley

(57) **Abstract**

A comparator (17) to check input voltage (VIN) and resistors (24, 25) are provided in the synchronous regulator. The comparator (17) checks whether low voltage batteries or high voltage AC adaptors are utilized, by comparing the voltage in the comparator (17) with a reference voltage, and outputs the compared result to a PWM comparator (20). In the PWM comparator (20), the ON duty ratio of the FETs (11, 12) is regulated as much as possible to keep the output voltage (VOUT) constant. Further, in the FET (11), in which the largest electric power loss is generated, the output voltage is varied within the range in which the change of the output voltage is allowable for the required output voltage, by setting the ON duty ratio lower. Such a regulating circuit can be used in notebook or lap-top personal computers to prolong battery operating time and reduce AC adaptor heat dissipation.

## Description

The present invention relates to a regulating circuit, more specifically, but not exclusively, to a regulating circuit designed to provide low electric power loss.

In recent years, electronic devices such as a notebook-type or lap-top personal computers, or the like, have become widely used and many innovations have been made to effect further reductions in size. For the power supply, many types of electronic devices, such as the notebook-type personal computer or the like, can make use of either the domestic power supply through an AC adaptor or built-in batteries.

In general, such electronic devices are powered by converting the input voltage to predetermined levels in the internal circuitry, when the battery or the domestic power supply is used for powering the devices. In the case of notebook-type personal computers, such predetermined voltage levels are typically 5v, 3.3v, 2.9v, or other voltage levels lower than these. In the internal circuitry, the voltages from the power supply are further reduced.

It is desirable in electronic devices, such as the notebook-type personal computer or the like, to prolong the battery operating time and to suppress heat generation in the AC adaptor. A synchronous regulating circuit has been developed to prolong the operating time of the battery and to control the heat dissipation from the AC adaptor.

Generally, in an electric circuit, however, an electric power loss occurs due to the difference between the input voltage and the output voltage when a high input voltage is converted to a low output voltage. In particular, the larger the difference Is between the input voltage and the output voltage, the more the electric power loss becomes. It is the switching element in the voltage converter which is closely related to the power loss.

Further, in recent situations, the load current tends to increase in the power supply, and the voltage drop caused by the increased load current causes another problem. This low voltage level has been the tendency in the power supply output for a CPU, where the voltage drop is especially a matter to overcome. The voltage drop means the phenomenon in which the power supply voltage is lowered by the impedance in the printed circuit conductors used for connections among the respective electronic elements. Generally, each element is designed to operate within an allowable percentage of the referenced input voltage. From the viewpoint of the recent tendency described above that the power supply voltage for a CPU is lowered and the output current is increased, the allowable range of the power supply voltage becomes narrower since the reference becomes lower, and the control requirements for the power supply voltage become more stringent.

According to a first aspect of the present invention there is provided a regulating circuit based on circuitry that converts the input voltage to the different levels of the output voltages, and comprises at least one switching means for converting the input voltage to the output voltage, a reference means for checking the input voltage level, and a controlling means for controlling the ON/OFF duty ratio in the switching means based on the reference level in the reference means.

In particular, according to the regulating circuit constituted above, the input voltage can be controlled by lowering the ON duty ratio in the switching means when it is at a high voltage level, through the AC adaptor or the like, in such a manner that the reference means is provided for checking the voltage level in the output voltage, and that the ON/OFF duty ratio of the switching means is controlled by the controlling means on the basis of the determined result of the reference means. Thus, electric power loss in the switching means can be reduced, which is considered to be worse in the regulating circuits, by setting the ON duty ratio smaller than normal.

Further, by controlling the ON/OFF duty ratio in the switching means, the output voltage can be varied a little. This can cope with the trouble of the voltage drop. Or, when the output voltage of the regulator is fed back, the output voltage can be varied more directly by controlling the circuitry and enabling provision of a variable feedback voltage. This is also another step towards resolving the problem of the voltage drop.

In another aspect of the present invention, it is a characteristic of the power supply circuit to reduce the electric power loss in each of the regulating circuits, by providing multi-stage regulating circuits between the input and the output, comprising at least one switching means for converting the input voltage to the output voltage, and a controlling means for controlling the ON/OFF ratio of the switching means.

According to this constitution, the electric power loss in one regulating circuit, more specifically in the switching means, can be reduced. Generally large differences between the input voltage and the output voltage cause a high power loss, but, in this configuration, as a plurality of regulating circuits are provided between the input and output, the voltage level reduction in each regulating circuit is lowered, thereby realizing the above reduction in power loss.

In addition, in a further aspect of the present invention, it is another characteristic to provide a synchronous regulating circuit to convert the input voltage to different levels of output voltages, comprising two switching means for converting the input voltage to the output voltage, and a controlling means for making the ON/OFF ratios in two switching means almost equal.

According to this constitution, the effect of reducing the electric power loss can be achieved by dividing the electric power loss equally between the two switching means, compared with the case where the electric power loss is carried in only one of the two switching means.

Accordingly with the above-described aspect of the invention, a power supply can be provided which is capable of finely regulating the voltage thus to operate within a relatively narrow allowable range.

With some preferred embodiments of the present invention it is possible to provide a regulating circuit which can prolong battery duration and/or reduce heat trouble when using an AC adaptor or the like, by suppressing to a minimum the losses in the switching elements and by reducing the drawback of a voltage drop.

Further aspects of the invention are exemplified by the attached claims.

A combination of some or all the constitutions and aspects referred to above can further reduce electric power loss and/or heat dissipation.

For a better understanding of the invention, and to show how the same may be carried into effect, reference will now be made, by way of example, to the accompanying drawings, in which:-
Fig. 1 is a block diagram showing an embodiment of a synchronous regulating circuit, with constant output;
Fig. 2 is a block diagram showing in more detail the load current differential amplifier and the output voltage differential amplifier of Fig. 1;
Fig. 3 is a block diagram showing a second embodiment of a synchronous regulating circuit, with constant output;
Fig. 4 is a block diagram showing a third embodiment of a synchronous regulating circuit, with variable output;
Fig. 5 is charts showing the output voltage waveforms of VOUT and the FET operation in each embodiment described above;
Fig. 6 is charts showing the voltage waveforms in the respective parts of the circuit when the ON duty ratio of FET 11 shown in Figs. 1 to 4 is varied; and
Fig. 7 is a block diagram showing another embodiment to reduce the electric power loss occurring by producing low voltages from high voltages.

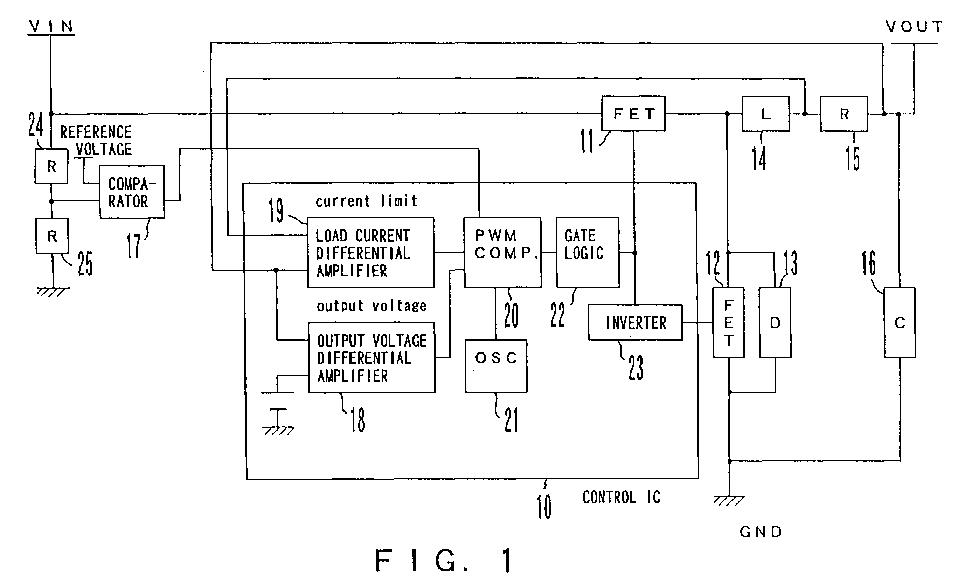

The synchronous regulating circuit shown in Fig. 1 comprises a control IC 10, FETs 11 and 12 as the switching elements, a diode 13 in parallel with the FET 12, an inductor 14 such as a coil, a resistor 15 and a capacitor 16.

The control IC 10 transfers the electric power from the input voltage to the output voltage by alternately turning the FETs 11 and 12 ON/OFF. The alternate ON/OFF operation of the FETs 11 and 12 charges the inductor 14, the resistor 15 and the capacitor 16. Firstly, when the FET 11 is turned ON, and the FET 12 OFF, the input voltage is applied to the inductor 14 and other elements, resulting in an increase rise in the output voltage. When the output voltage rises to a predetermined level, the control IC turns the FET 11 OFF and the FET 12 ON. At this point, the energy charged in the inductor 14, the resistor 15 and the capacitor 16 is discharged, resulting in a drop in the output voltage. When the voltage reaches a lower limit, the FET 11 is turned ON and the FET 12 OFF again.

In such a manner as described above, electric power can be supplied at a predetermined voltage level to the load connected to the synchronous regulator in FIG.1, by regulating the output voltage to a predetermined level.

In the synchronous regulator constituted in the circuitry described above, if both the FET 11 and the FET 12 are turned ON simultaneously, a short circuit occurs from the input to the ground GND, resulting in the discharge of a great deal of current and the possibility of a circuitry breakdown. Accordingly, for the control operation in the control IC 10, it is designed to turn both of the FETs OFF simultaneously, followed by turning ON either one of the two FETs. For example, when both of the FETs 11 and 12 are simultaneously turned OFF after the ON state in the FET 11 and the OFF state in the FET 12, the inductor 14, the resistor 15 and the capacitor 16 tend to discharge the energy contained in each element. At this time, a path through both of the FETs 11 and 12 is opened. Therefore, no current flows and no energy is discharged through this path. In other words, the state of the output voltage remains unstable. In order to cope with the unstable state, the diode 13 is provided. The current flows through the diode 13 when both FETs are turned OFF. This prevents the state of the output voltage from becoming unstable and facilitates the subsequent energy supply to the output voltage. The FET 12 is instantly turned ON, and, similarly, the energy charged in the inductor 14, the resistor 15 and the capacitor 16 is discharged from the circuit through the FET 12. As the energy charged in the output side is discharged, the output voltage drops.

The FETs 11 and 12 serve as the switching elements, and electric power is lost when the voltage is converted from a high input voltage to a low output voltage. In particular, the FET 11 is the most likely to lose electric energy, and the FET 12 and the diode 13 also lose energy in turn. It is known that the electric power loss in the FET 11 reduces as the ON/OFF timing or duty ratio in the FET 11 becomes shorter. Therefore, the duty ratio to turn the FET 11 ON is made smaller while the sum of the ON time and the OFF time, that is, the period, is kept constant. In the embodiment, the input voltage is checked, and the ON duty ratio is made smaller when the input voltage rises, and the ON duty ratio is made larger when the input voltage drops.

A comparator 17 is a device to check the input voltage, and the voltage appropriately divided by a series resistors 24 and 25 is applied to the comparator 17. In addition, a reference voltage is also applied to the comparator 17 to determine whether a high voltage power source such as an AC adaptor or a low voltage power source such as built-in batteries, is connected to the input terminal. By comparing the reference voltage with the input voltage from the input terminal, the comparator issues a signal, representing whether the input voltage is high or low, to the PWM comparator 20 in the control IC 10. In this case, the terms high voltage or low voltage are used relatively. The high voltage is the case where the AC adaptor or the like is connected to the input terminal as the power source, and the low voltage means the case where batteries are connected to the input terminal.

The PWM comparator 20 receives the output of the load current differential amplifier 19 and the output voltage differential amplifier 18, and receives the output of the oscillator 21 to generate the ON/OFF timing signal for the FETs 11 and 12. The signal issued by the PWM comparator 20 is applied to the gate logic circuit 22, converted to the signal to drive the FETs 11 and 12 and fed to the FET 11 and to the FET 12 through inverter 23.

A PWM comparator 20 compares the periodical wave brought from the oscillator 21 with the threshold value set in the PWM, and generates the HIGH and LOW output signals from the periodical wave. Thus, by generating two kinds of HIGH and LOW signals, the control of the timing signal (control of duty ratio) is executed for driving the FETs 11 and 12. The PWM comparator 20 further has the function of receiving the output from the load current differential amplifier 19 and the output voltage differential amplifier 18, and of controlling the duty ratio so as to set the output current and the output voltage in the output terminal (VOUT) below the threshold value.

In the synchronous regulating circuit of the present invention, the ON/OFF signal from the PWM comparator 20 is generated by the oscillator 21 with a constant frequency. For example, the sum of the time when the FET 11 turns ON and the time when the FET 12 turns OFF is kept constant.

The load current differential amplifier 19 detects the current flowing through the resistor 15, in other words, checks the current supplied to the output terminal (VOUT), by comparing the voltage difference between both terminals of the resistor 15 with a reference voltage stored in the load current differential amplifier 19.

The output voltage differential amplifier 18 compares the output voltage in the output terminal (VOUT) with the reference voltage, outputs the inputted voltage when the output voltage is not more than the reference voltage, and outputs the reference voltage when the output voltage is more than the reference voltage.

The PWM comparator 20 receives the outputs of the output voltage differential amplifier 18 and the load current differential amplifier 19, and checks if each of both outputs indicates a maximum value. If the checked value is a maximum, it is verified that too much voltage or current is applied to the output terminal (VOUT). Accordingly, the ON duty ratio of the FET 11 is lowered to a predetermined value. In other words, a higher threshold value to generate a HIGH signal by converting, for example, the constant periodic wave of the oscillator 21 to an ON/OFF signal, is selected to be a higher value. As a result, a periodic wave cut by a high threshold value becomes small portion of the original waveform, and the ON time of the FET 11 becomes shorter. Thus, as the time for which the input voltage is applied to the output terminal (VOUT) becomes shorter, the time for raising the voltage or the time for current flow also becomes shorter, resulting in reducing the value of the output voltage or current to the output terminal (VOUT). In addition, the control is executed by keeping constant the sum of the ON and OFF times (period) in the FETs 11 and 12. In such a controlling procedure as described above, the ON duty ratio in the FET can be lowered while the period of the ON/OFF time is kept constant.

When the PWM comparator 20 outputs the high ON and the low OFF timing signals, the gate logic circuit 22 converts both signals to the signals for driving the FETs 11 and 12, in such a manner as described above. For example, the voltage in the HIGH state is the input voltage and the LOW state corresponds to the voltage of the grounded contact.

An inverter 23 is a logical inverting element for inverting the HIGH signal from the gate logic circuit 22 to the LOW signal and the LOW signal to the HIGH signal. This is provided for alternately energizing the FET 11 and the FET 12.

Further, the PWM comparator 20 receives the output from the comparator 17 for detecting the input voltage (VIN) and regulates the duty ratio in accordance with the input voltage (VIN). More specifically, when a signal indicating that the input voltage is low is transmitted from the comparator 17, the PWM comparator 20 executes the controlling operation based on the normal duty ratio control. On the other hand, when a signal indicating a high input voltage is transmitted; the PWM comparator 20 executes the controlling operation by setting a smaller ON duty ratio of the FET 11 with the varied threshold value. As a result, the largest electric power loss in the FET 11 can be reduced. An appropriate variation of the threshold value is predetermined. On receiving the signal representing the high input voltage at the input terminal (VIN), the threshold value is switched to vary by a predetermined value.

For the sake of a clearer explanation, FIG.1 shows the circuit structure using the inverter 23 described above. In fact, a regulating means for the ON/OFF timing is included to avoid simultaneously energizing both FETs 11 and 12.

In addition, the comparator 17 and the resistors 24,25 are included in FIG.1 as the input voltage detecting means. It is of course possible to constitute the circuitry so that an external unit or the user determine and set whether the input voltage is low due to using batteries, or high on account of using an AC adaptor. In this case, the external control unit has only to transmit two kinds of signals to the PWM comparator 20 representing whether the input voltage is high or low.

The ON duty ratio of the FETs 11 and 12 varies depending on the input voltage level. If a pair of ON duty ratios in the FETs 11 and 12 after and before they vary are approximately set equal, the electric power loss can be equally distributed between each of the FETs 11 and 12, resulting in the positive effect of eliminating the power loss. Or, it is effective to reduce the loss only by predetermining a pair of ON duty ratios in the FETs 11 and 12 to be an equal value, without varying the two ON duty ratios in accordance with the input voltage levels.

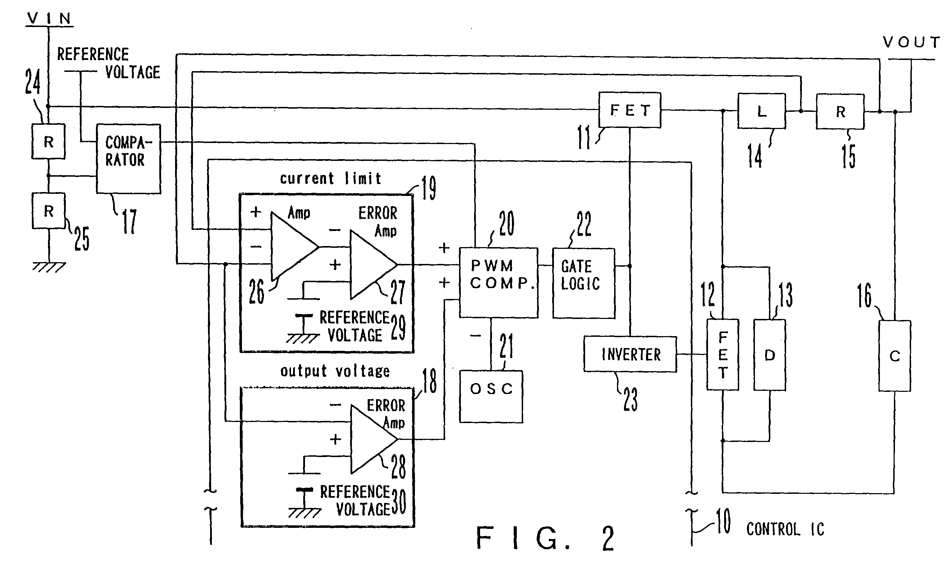

FIG.2 is the circuitry of the load current differential amplifier 19 and the output voltage differential amplifier 18 according to FIG.1, and the same reference numerals as used in FIG.1 are denoted to each common element.

In the load current differential amplifier 19, an operational amplifier 26 and an error amplifier 27 are connected in series. The voltages at both sides of the resistor 15 are fed to the operational amplifier 26. The operational amplifier 26 outputs the voltage difference across the resistor 15 to the error amplifier 27 for comparison with the reference voltage 29. If the input is less than the reference voltage 29, this shows that the current in the resistor 15 is not more than the maximum and the error amplifier feeds the output to the PWM comparator 20 without any regulation. If the input is more than the reference voltage 29 of the error amplifier 27, the error amplifier outputs the reference voltage 29 and the PWM comparator 20 checks the input of the reference voltage 29. As the input of the reference voltage 29 to the PWM comparator 20 shows that the current in the resistor 15 is more than the maximum, the current in the resistor 15 is lowered by the PWM comparator 20 varying the threshold value to a predetermined value to lower the ON duty ratio in the FET 11.

The output voltage differential amplifier 18 contains a reference voltage 30, and comprises an error amplifier 28 which inputs of the reference voltage 30 and the voltage fed from the output terminal (VOUT). The error amplifier 28 functions in the same manner as the error amplifier 27. If a smaller voltage than the reference voltage 30 is fed to the error amplifier 28, it is directly outputted. If a larger voltage is fed, the reference voltage 30 is outputted.

The PWM comparator 20 checks if the output from the error amplifier 28 is set to the reference voltage 30. If the output is not more than the reference voltage 30, the ON duty ratio in the FET 11 is regulated on the basis of the output from the error amplifier 28. If the output is equal to the reference voltage 30, the ON duty ratio in the FET 11 is regulated to be lower by varying the threshold to a predetermined value, because the input voltage from the error amplifier 28 exceeds the maximum. In such a collecting manner as described above, the voltage applied to the output terminal (VOUT) becomes lower than the maximum.

As will be described later, the output voltage differential amplifier 18 can set two reference voltages, one for maximum voltage and another for minimum voltage. The output from the comparator 17 can be fed to the output voltage differential amplifier 18, not to the PWM comparator 20. Thus, the ON duty ratio in the FET 11 is varied by inputting to PWM comparator 20 an output which is produced by a lower one of two reference values of the output voltage differential amplifier 18 and raised.

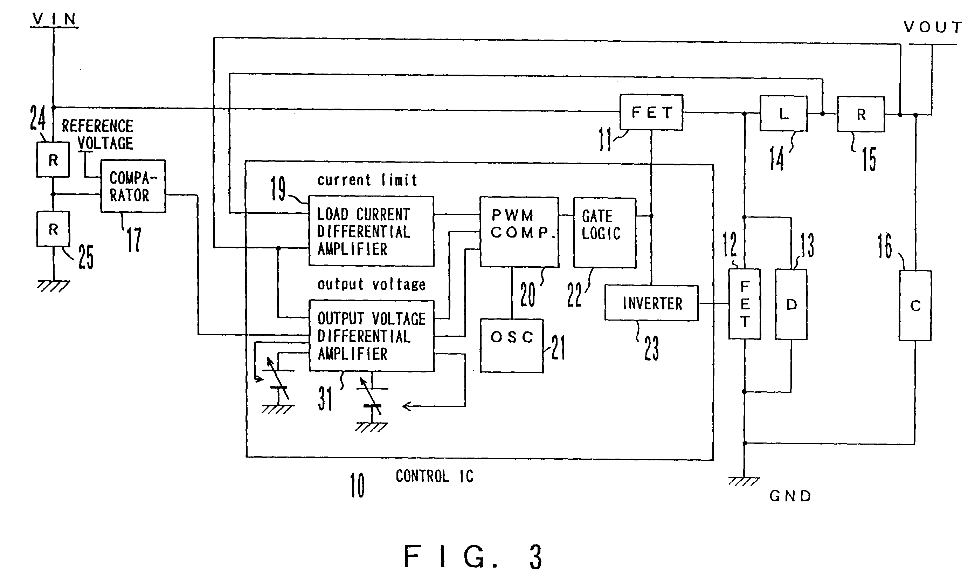

FIG.3 shows another structural example of the constant output synchronous regulating circuit in FIG.1. The same reference numerals as in FIG.1 are denoted to each common element. In FIG.3, the output of the comparator 17 for checking the input voltage (VIN) is fed to an output voltage differential amplifier 31, and two reference voltages are included for monitoring the maximum and the minimum voltages.

In this embodiment, two error amplifiers are provided, one for setting the maximum voltage and one for the minimum voltage.

In the PWM comparator 20, the signal from the output voltage differential amplifier 31 is checked. When the reference voltage representing the minimum voltage is outputted, the timing signal is transmitted to turn ON the FET 11 by varying the threshold value. In the case of the maximum voltage, the timing signal is transmitted to turn OFF the FET 11.

The output voltage differential amplifier 31 varies the reference voltage when the input voltage (VIN) is determined to be high by the signal from the comparator 17. On receiving the varied maximum and minimum voltages, the PWM comparator 20 sets the ON/OFF timing of the FET 11 with an appropriate threshold value. When the input voltage is high, the output voltage differential amplifier 31 raises the minimum value. Thus, the timing signal generated from the PWM comparator 20 makes the ON duty ratio shorter while the sum of the ON and the OFF duty times is kept constant.

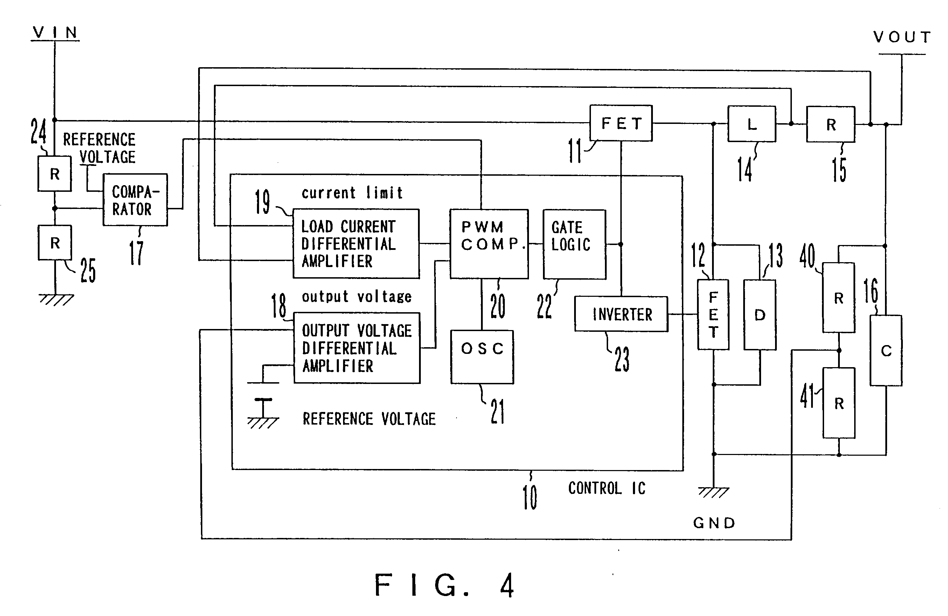

FIG.4 shows an embodiment of the variable output voltage synchronous regulating circuit. The same reference numerals as in FIG.1 are given to each element, and explanation about these elements is omitted.

In the circuitry in FIG.4, the output voltage (VOUT) to the output voltage differential amplifier 18 is divided by resistors 40 and 41 and thereby reduced. By inputting the reduced voltage to the output voltage differential amplifier 18, the output voltage (VOUT) can be varied by the variation in the ratio of the resistors 40 and 41 in series, without changing the level in the reference voltage. More specifically, the reference voltage connected to the output voltage differential amplifier 18 is compared with the voltage taken from the resistors 40 and 41 in series in the output voltage differential amplifier 18. As the voltage lowered from the output voltage level by the resistors 40 and 41 in series is supplied to the output voltage differential amplifier 18, the output voltage (VOUT) level exceeding the reference level becomes larger. By changing the ratio of the resistors 40 and 41 in series, the input voltage to the output voltage differential amplifier 18 varies, even in the constant output voltage (VOUT) level. Therefore, the output voltage (VOUT) necessary to exceed the reference voltage can be varied. If the voltage obtained from the resistors 40 and 41 in series exceeds the reference voltage, the output voltage differential amplifier 18 issues a signal to the PWM comparator 20 to lower the ON duty ratio of the FET 11. Accordingly, the output voltage (VOUT) falls as the ON duty ratio is lowered, to such an extent that the voltage can be regulated never to exceed the maximum of the output voltage determined by the output voltage differential amplifier 18.

Thus, the output voltage (VOUT) can be varied by inputting a voltage divided by the resistors 40 and 41 in series, without directly inputting the voltage from the output terminal (VOUT) to the output voltage differential amplifier 18.

In the circuitry in FIG.4, the comparator 17 is provided to check the input voltage. When the input voltage (VIN) is detected as being high by the PWM comparator 20, a signal representing a high input voltage is issued to vary the threshold value for lowering the ON duty ratio. Thus, the electric power loss can be reduced.

In the embodiments shown in FIGS.1 to 4 described above, the ON duty ratio in the FET 11 is varied to solve the problem of electric power loss, and, as a result, the output voltage varies a little. Similar to the problem of the voltage drop, in such a case where the output voltage, which is designed to be a desired value, is measured as being below the allowable level necessary to drive a load up on development of the device, the variable ON duty ratio in the FET 11 causes slight changes in the output voltage and thereby enables the output voltage to be set within the requirements of the load. Accordingly, the synchronous regulating circuit can not only provide an improvement in the electric power loss, but can also cope with the problem of voltage drop. In particular, the embodiment in Fig. 4 includes another factor in the circuit to vary the output voltage, namely by varying the ratio of the resistors 40 and 41 in series, the voltage drop can be compensated.

Further, in the above embodiment, an explanation is given only about the synchronous regulating circuit. However, the above-described principles can be applied to any circuit for converting high voltage to low voltage by changing the ON duty ratio of a switching element corresponding to the FET 11. In particular, known prior art regulating circuits can be modified to take advantage of the features described herein.

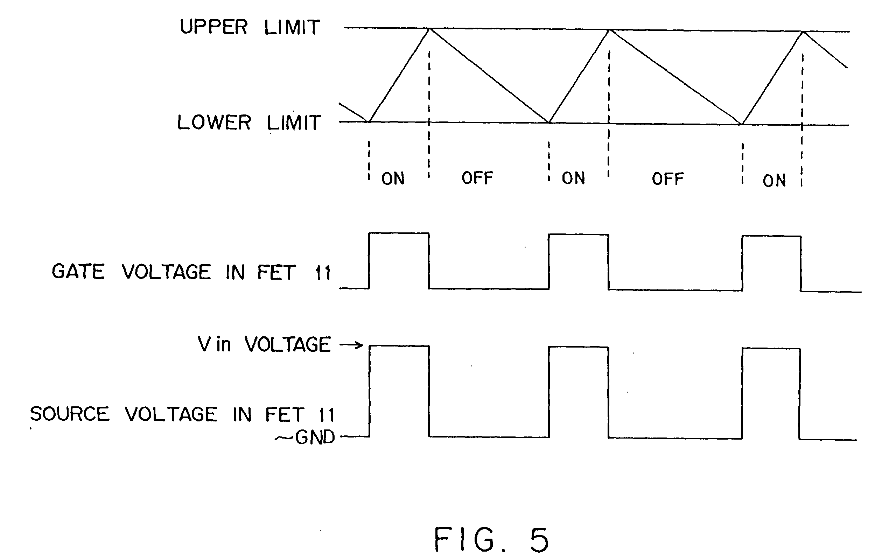

Fig. 5 shows the output voltage waveform and the operation of the FET in each of the embodiments described above.

As shown in FIG.5, the gate voltage signal from the gate logic circuit 22 illustrated in the middle of the charts in FIG.5 as a square waveform is applied to the gate of the FET 11. When a voltage in the high level is applied to the gate of the FET 11, the current flows between the drain and the source, and the voltage exerts. This is shown in the bottom of the charts in FIG.5 as the square waveform. The waveform in the upper part of FIG.5 is an output voltage waveform at the output terminal (VOUT). When the FET 11 turns ON, the voltage rises up to the maximum value. When the FET 11 turns OFF, the output voltage drops from the maximum value down to the minimum value. These maximum and minimum voltages are determined in accordance with the ON/OFF duty ratio. In the case of the embodiment in FIG.3, the voltage is regulated by varying the feedback voltage. By varying the maximum and minimum voltages, the ON duty ratio in the FET 11 is determined.

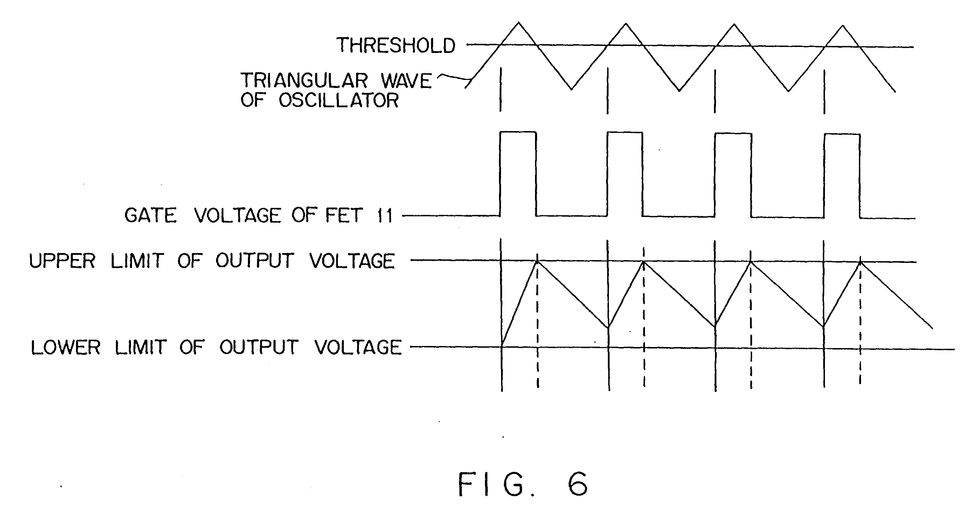

FIG.6 shows the voltage waveform in the respective components, when the ON duty ratio of the FET 11 is varied.

The triangular waveform shown in the upper chart of FIG.6 is the form of the periodical wave generated from the oscillator 21. The triangular waveform is one example. A sinusoidal wave can be generated in addition to the above example. The threshold value is set in the PWM comparator 20. When the triangular wave from the oscillator exceeds the threshold value, the PWM comparator 20 outputs a voltage in the high level. When the triangular wave falls below the threshold value, the PWM comparator 20 outputs the low level voltage.

The waveform of the middle chart in FIG.6 shows the voltage waveform applied to the gate of the FET 11. This is the output voltage waveform of the gate logic circuit 22 obtained from the output of PWM comparator by converting the high and low levels for driving the FET 11 while retaining the period of the waveform. Accordingly, the duty ratio of the waveform can be varied by varying the threshold value in the PWM comparator 20. Moreover,
the ON duty ratio is regulated as a normal function according to the input voltage level, and, further, in the case of a higher input voltage, a higher threshold value is set for reducing the ON duty ratio.

The waveform shown in the lower chart in FIG.6 shows the output voltage waveform at the output terminal (VOUT). As shown in FIG.5, prior to lowering the ON duty ratio of the FET 11, the output voltage goes up and down as a triangular wave between the maximum and the minimum values. However, when the ON duty ratio is lowered in the FET 11 the minimum value of the output voltage (VOUT) is raised. At this time, the rise of the triangular wave in the output voltage (VOUT) is determined in accordance with the voltage difference between the input voltage (VIN) and the output voltage (VOUT). The fall of the wave is determined by the voltage difference between the VOUT and the ground GND.

The gradient of the rise is slightly less in FIG.6 than in FIG.5, because the voltage difference between the input voltage (VIN) and the output voltage (VOUT) is slightly smaller in FIG.6 than in FIG.5. Judging from the attached FIG.6, the gradient looks larger but, this is due to an apparent change in drafting. As the minimum value of the output voltage (VOUT) is raised, so the lowest voltage, at the instant when the FET 11 turns ON, slightly rises. Accordingly, the voltage difference becomes smaller between the input voltage (VIN) and the output voltage (VOUT) and the gradient rises slowly. When the output voltage reaches its highest value, the maximum value is fed back to the PWM comparator to turn OFF the FET 11. The output voltage (VOUT) at the output terminal falls as shown in the lower chart in FIG. 6. Next time when the FET 11 turns ON, the minimum value of the output voltage (VOUT) sets a slightly higher level than the initial point. When the FET 11 turns ON again, the voltage rises and the FET 11 is kept in the ON state up to the maximum value.

By successively controlling the FET 11 in such a manner as described above, the minimum value of the VOUT to be fed back is raised and the ON duty ratio of the FET 11 is lowered.

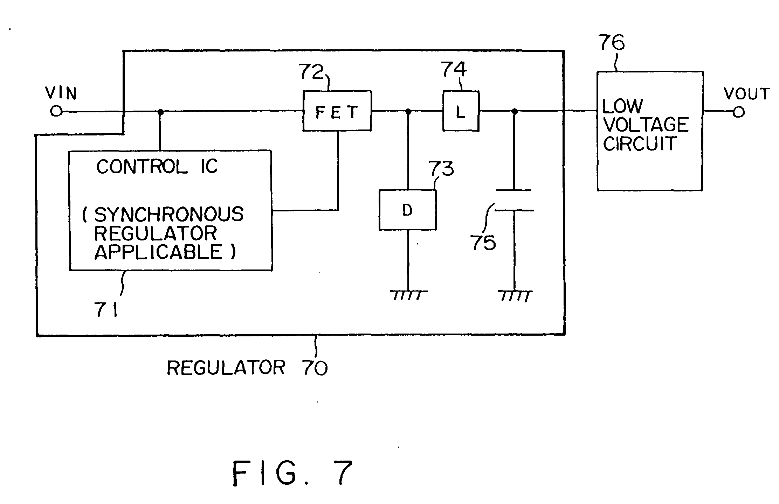

FIG.7 shows another embodiment to reduce electric power loss when generating a low voltage output from a high voltage input.

The larger the voltage difference is between the input and the output, the larger the electric power loss becomes. In order to reduce the electric power loss in one circuit, it is provided with a regulator 70, which may be a multi stage down circuit. The regulator 70 in FIG.7 is not the synchronous type, but it can be, of course, a synchronous regulator to the circuitry in FIG. 7.

In the embodiment shown in FIG.7, a regulator 70 is connected in series to the circuitry which is structurally similar to the regulator 70, or to a low voltage circuit 76 which is a synchronous regulator. The regulator used in FIG.7 is not a synchronous type, but a synchronous regulator can also be utilized. More specifically, the VIN voltage from output side is applied to the control IC 71. The control IC 71 determines whether the power supply connected to the VIN is a high voltage or a low voltage, and regulates the duty ratio of the FET 72. By the successive ON/OFF operation of the FET 72, the inductor 74 and the capacitor 75 are charged and the low voltage circuit 76 is supplied with a lowered output voltage. In case that the FET 72 is ON, the inductor 74 and the capacitor 75 are charged, and, when the FET 72 is OFF, the inductor 74 and the capacitor 75 are discharged to the output side through the diode 73.

The output voltage of the regulator 70 is lower than the input voltage (VIN), but it can be larger than the output voltage (VOUT) at the output terminal. Therefore, the electric power loss in the regulator 70 is comparatively small. The low voltage circuit 76 in the next stage generates the output voltage (VOUT) from the output voltage of the regulator 70, which is lower than the input voltage (VIN). Accordingly, electric power loss can be further reduced using the above configuration in comparison to the conventional case where the output voltage (VOUT) is directly generated from the input voltage (VIN).

Thus, multi-stage regulators can reduce electric power loss in each stage. Therefore, a longer life can be expected from batteries and, at the same time, generation of heat can be reduced even in the case where AC adaptors are used.

According to the above, electric power loss can be reduced in the switching elements and the problem of voltage drop can be handled by making use of a variation between the maximum and the minimum output voltages to slightly vary the average output voltage.

Therefore, batteries can be put into long term use and AC adaptors can be used without generating heat. Further, a reduction in size of the switching elements can be realized because of the reduction of heat generation.

## Claims

1. A regulating circuit for converting an input voltage to an output voltage at a different voltage level, comprising:
at least one switch (11) for applying a converted input voltage to an output terminal;
detecting means (17) for detecting a value of the input voltage; and
a control circuit (10) for regulating an ON/OFF duty ratio of said switch on the basis of the value detected by said detecting means.

2. A regulating circuit as set forth in claim 1, wherein said control circuit (10) is operable to suppress electric power loss in said switch (11) by making an ON duty ratio smaller in said switch, when the input voltage is classified as being high by said detecting means.

3. A regulating circuit as set forth in claim 1 or 2, said control circuit (10) having means for receiving an external signal for regulating the ON/OFF duty ratio of said switch (11).

4. A regulating circuit as set forth in claim 1, 2 or 3, wherein said control circuit (10) is operable to vary the output voltage by regulating the ON/OFF duty ratio of said switch so as to compensate for a voltage drop between the output side and a load connected to the output side.

5. A regulating circuit as set forth in claim 1, 2, 3 or 4, further comprising circuitry including at least two resistors (40, 41) and means for applying an output voltage from said two resistors to said control circuit (10), whereby the output voltage can be regulated by varying the voltage applied to said control circuit (10) with the variation of the resistance values of said two resistors (40, 41).

6. An electric power supplying circuit comprising a plurality of regulating circuits (70, 76), comprising:
at least one switch (71) for supplying a converted input voltage to an output terminal and control circuit for regulating the ON/OFF duty ratio of said switch (72),
wherein said plurality of regulating circuits are provided in multi-stage between the input and the output to suppress electric power loss in each of the regulating circuits (70, 76).

7. A synchronous regulating circuit for converting an input voltage to an output voltage at a different voltage level, comprising:
two switches (11, 12) for applying the converted input voltage to an output terminal; and
a control circuit (10) for regulating the ON/OFF duty ratio of said switch (11, 12),
wherein the ON/OFF duty ratio of said two switches (11, 12) is set to be approximately equal.
